# EUROPÄISCHE PATENTSCHRIFT

(11) **EP 0 700 776 B1**
(45) Veröffentlichungstag und Bekanntmachung des Hinweises auf die Patenterteilung: **20.10.1999**
(21) Anmeldenummer: 95112371.0
(22) Anmeldetag: 05.08.1995
(51) Int. Cl.: B32B 13/04, C04B 24/26

(54) **Bauwerk aus einem Betonkörper mit zumindest einer vorgesetzten Glasscheibe**
Building element consisting of a concrete body with at least one attached glass pane
Structure comprenant un élément en béton avec au moins une vitre attachée à celui-ci

(30) Priorität: 09.09.1994 DE 4432050; 09.09.1994 DE 4432051; 12.10.1994 DE 4436368
(43) Veröffentlichungstag der Anmeldung: 13.03.1996
(73) Patentinhaber: Böe, Hans Peter, 46049 Oberhausen (DE)
(72) Erfinder: Böe, Hans Peter, 46049 Oberhausen (DE)
(74) Vertreter: Honke, Manfred, Dr.-Ing.

(56) Entgegenhaltungen:
- DE-C- 4 241 042
- FR-A- 2 395 233
- GB-A- 2 018 737
- DATABASE WPI Section Ch, Week 8546 Derwent Publications Ltd., London, GB; Class A93, AN 85-286173 XP002003566 & JP-A-60 195 049 (MARINAX P D) , 3.Oktober 1985
- DATABASE WPI Section Ch, Week 8905 Derwent Publications Ltd., London, GB; Class A93, AN 89-035385 XP002003567 & JP-A-63 308 137 (KAJIMA KK) , 15.Dezember 1988

## Beschreibung

Die Erfindung betrifft ein Bauwerk aus einem Betonkörper mit zumindest einer vorgesetzten Glasscheibe. Die Erfindung betrifft fernerhin Verfahren zur Errichtung derartiger Bauwerke. - Bauwerk meint im Rahmen der Erfindung einerseits ein ortsfestes Bauwerk oder eine Bauwerkswand, wobei der Betonkörper in Ortbeton ausgeführt wird. Bauwerk meint andererseits auch vorgefertigte Bauwerke aus einem Betonkörper mit zumindest einer vorgesetzten Glasscheibe, wobei diese vorgefertigten Bauwerke transportabel sind und im Zuge von Baumaßnahmen einzeln einbaubar oder zu einer Wand kombinierbar sind.

Beton meint im Rahmen der Erfindung ein Gemisch, das im wesentlichen aus Zement, Betonzuschlag und Wasser besteht, das in eine Schalung eingegossen werden kann und erhärtet. - Die Glasscheibe braucht im fertiggestellten Zustand des Bauwerkes bzw. im eingebauten Zustand eines vorgefertigten Bauwerkes nicht mehr sichtbar sein, sondern kann eine technische Funktion erfüllen. Der Betonkörper und die Glasscheibe können beliebige geometrische Maße aufweisen. Vor den Betonkörper können mehrere nebeneinander angeordnete Glasscheiben gesetzt werden.

Bei den aus der Praxis bekannten Verfahren zur Herstellung eines Bauwerkes aus einem Betonkörper mit einer vorgesetzten Glasscheibe wird zunächst der Betonkörper hergestellt, regelmäßig der Beton also in eine entsprechende Schalungsform gegossen und wird zunächst das Erhärten des Betons abgewartet. Erst nach dem Erhärten des Betons wird der Betonkörper mit einer oder mehreren Glasscheiben versehen. Diesbezüglich ist es bekannt, die Glasscheiben mit mechanischen Hilfsmitteln auf dem Betonkörper zu befestigen. Diese mechanische Befestigung ist sehr aufwendig. Weiterhin ist es auch bekannt, die Glasscheiben durch Kleben, beispielsweise mittels eines Kunstharzklebers, auf dem Betonkörper zu befestigen. Auch solche Montagen sind aufwendig. Insbesondere stört, daß die gefahrenfreie Standzeit solcher Glasscheiben verhältnismäßig gering ist. Bei einer Befestigung mit Hilfe eines Kunstharzklebers kann dieser Kleber altern und dadurch versagen, je nach den klimatischen Verhältnissen oft in verhältnismäßig kleinen Zeitspannen. Dadurch lösen sich die Glasscheiben, zumindest bereichsweise, vorzeitig. Insoweit ist es schwierig, die Sicherheitsvorschriften zu erfüllen, die die Zulassungsbehörden erlassen haben, um ein unkontrolliertes Abstürzen von Glasscheiben zu verhindern. Diese bekannten Verfahren zeichnen sich insbesondere durch den Nachteil aus, daß bei Wärmedehnungen der Glasscheibe die Befestigungsmittel diese Dehnungen nicht ausreichend mitmachen und die Glasscheiben dadurch Risse erhalten.

Aus der AT-PS 196 079 ist weiterhin ein Verfahren bekannt, um farbige, mit einer Haftschicht versehene Verkleidungsplatten aus Glas herzustellen. Hier wird auf die Glasplatte zur gleichzeitigen Bildung der Haft- und Farbschicht eine etwa 15 - 20%-ige Festkörper enthaltende wässrige Kunstharzdispersion aus Polyvinylacetat mit Zusatz eines Weichmachers und eines Farbstoffes aufgespritzt. Auf diese erste Schicht wird Sand aufgestreut, um die Kunstharzschicht vor Beschädigungen, z. B. während des Transportes, zu schützen. Die Sandschicht dient auch dazu, die Haftfestigkeit der Glasplatte an dem Zementmörtel sicherzustellen, mit dem die Platten schließlich an einer Wand befestigt werden. Die bekannten Maßnahmen sind aufwendig, zumal auf der Glasplatte verschiedene Schichten aufgetragen werden müssen. Außerdem läßt auch hier die Haftung des Glases zu wünschen übrig.

Der Erfindung liegt das technische Problem zugrunde, ein Bauwerk der eingangs genannten Art anzugeben, das einfach und wenig aufwendig herstellbar ist und bei dem der Verbund zwischen Glasscheibe und Beton langfristig allen Anforderungen genügt. Der Erfindung liegt fernerhin das technische Problem zugrunde, Verfahren zur Errichtung eines derartigen Bauwerkes anzugeben.

Zur Lösung dieses technischen Problems lehrt die Erfindung ein Bauwerk aus einem Betonkörper mit zumindest einer vorgesetzten Glasscheibe, welches die folgenden Merkmale aufweist:
1.1) Die Glasscheibe weist bauwerkseitig eine Beschichtung aus Verbundmörtel auf,
1.2) der Verbundmörtel besteht aus einem feinteiligen neutralen Zuschlagstoff, Zement und ist mit einer wässrigen Dispersion eines Polyacrylsäurederivats angemacht, wobei das Polyacrylsäurederivat ein logarithmisches Dekrement, bestimmt nach DIN 53445, aufweist, welches bei Celsiustemperaturen von unter 0° ein Maximum aufweist,
1.3) der Verbundmörtel ist auf der Glasscheibe mit Mangel an Hydratationswasser erhärtet,
1.4) die Beschichtung der Glasscheibe aus Verbundmörtel ist mit dem Beton des Bauwerkes monolithisch verbunden,
wobei der Verbundmörtel gemäß 1.2) durch seinen Anteil an dem Polyacrylsäurederivat und die Dicke der Beschichtung so eingestellt sind, daß sie Wärmedehnungen der Glasscheibe rißfrei mitmachen.

Nach bevorzugter Ausführungsform der Erfindung weisen die Glasscheiben eine Dicke von 4 mm und mehr auf, vorzugsweise eine Dicke von etwa 4 bis 8 mm. Die Glasscheiben können aus nicht vorgespanntem, vorzugsweise aber aus vorgespanntem Glas bestehen. Dabei kann es sich um einfache und um Verbundglasscheiben handeln. Nach bevorzugter Ausführungsform der Erfindung sind die Glasscheiben als Float-Glasscheiben ausgeführt. Die maximale Größe der Glasscheiben soll im Bereich von 4000 mmm x 4000 mm liegen. Die Glasscheibe kann auch eine Isolierglaseinheit sein.

Mörtel meint im Rahmen der Erfindung einen Bindebaustoff für den Verbund zwischen Glasscheibe und Beton. Die Beschichtung aus dem Mörtel kann im Spritz-, Roll-, Spachtel- oder ähnlichen Verfahren auf die Glasscheibe aufgetragen werden. Erhärten des Mörtels meint "ausreichende" Erhärtung. Die Schicht aus Verbundmörtel darf nicht zu steif oder zu starr sein. Auf diese Weise bleibt die aufgebrachte Schicht aus Mörtel fähig, sich mit frischem, noch nicht erhärtetem Beton zu verbinden. Zu einer optimalen Verbindung mit dem Beton trägt auch das beigegebene Polyacrylsäurederivat bei. Nach bevorzugter Ausführungsform der Erfindung weist die Verbundmörtelschicht eine Schichtdicke von 2 bis 7 mm, vorzugsweise 4 bis 6 mm, auf.

Vorzugsweise weist der Verbundmörtel einen feinteiligen neutralen Zuschlagsstoff der Körnung von 0,1 bis 1 mm, vorzugsweise 0,2 bis 0,7 mm, auf. Zweckmäßigerweise wird Quarzsand oder auch Glasmehl als feinteiliger neutraler Zugschlagstoff verwendet. Nach bevorzugter Ausführungsform der Erfindung ist der Zement Portlandzement. Es liegt im Rahmen der Erfindung, daß der Zement, vorzugweise Portlandzement, angefärbt wird. Auf diese Weise lassen sich im Falle der Verwendung von durchsichtigen Glasscheiben farbige Fassaden mit besonderer ästhetischer Wirkung herstellen. - Polyacrylsäurederivate meint im Rahmen der Erfindung insbesondere Polymere auf Basis von Acrylaten, d. h. Acrylsäureestern und ihren Derivaten, Acrylsäure oder Acrylnitril als charakteristischen Kettenbaustein. Das Polyacrylsäurederivat kann auch als Copolymer ausgeführt sein, in dem insbesondere Acrylate, Acrylsäure oder Acrylnitril als Comonomere eingesetzt sind. Auch Methacrylsäure und ihre Derivate sind als Comonomer möglich. Es liegt auch im Rahmen der Erfindung, daß das Polyacrylsäurederivat gemäß Patentanspruch 1 als Polymerengemisch verschiedener Polyacrylsäurederivate ausgeführt ist. Nach bevorzugter Ausführungsform der Erfindung, der im Rahmen der Erfindung besondere Bedeutung zukommt, ist das Polyacrylsäurederivat eine Polyacrylat, vorzugsweise ein Acrylharz. Es liegt im Rahmen der Erfindung, daß Polyacrylat-Klebstoffe in den Verbundmörtel eingemischt werden. Nach bevorzugter Ausführungsform der Erfindung ist das Polyacrylsäurederivat, vorzugsweise Polyacrylat, ein Copolymer mit Acrylnitril als Comonomer. Vorzugsweise beträgt dabei der Anteil des Acrylnitrilcomonomeren bezogen auf das Polyacrylsäurederivat, vorzugsweise Polyacrylat, zumindest 2 Gew.-%. Der Verbundmörtel wird mit einer wässrigen Dispersion, beispielsweise einer wässrigen Emulsion, des Polyacrylsäurederivats angemacht.

Erfindungsgemäß weist das Polyacrylsäurederivat ein logarithmisches Dekrement, bestimmt nach DIN 53445, auf, welches bei Celsiustemperaturen von unter 0° ein Maximum aufweist. Hierbei handelt es sich um das logarithmische Dekrement Λ der Torsionsschwingungsdämpfung beim Torsionsschwingungsversuch nach DIN 53445 mit dem Polyacrylsäurederivat als Probekörper. Vorzugsweise wird ein Polyacrylsäurederivat eingesetzt, dessen logarithmisches Dekrement bei Celsiustemperaturen von über -8° C ein Maximum aufweist. Es ist bekannt (siehe beispielsweise DE-PS 28 27 382), in einem Bindemittel zur Herstellung von Beton oder Mörtel einen Kunststoff einzusetzen, dessen logarithmisches Dekrement, bestimmt nach DIN 53445, bei Celsiustemperaturen von unter -8° C ein Maximum durchläuft. Ziel dieser Maßnahmen ist es, Baustoffmischungen für Bauteile und Beläge zu schaffen, die Temperaturen von unter 0° C ausgesetzt sind und die nichtsdestoweniger eine ausreichende Elastoplastizität und eine vorteilhafte Schlagdämpfung und Abriebfestigkeit aufweisen sollen.

Der Erfindung liegt die Erkenntnis zugrunde, daß ein Polyacrylsäurederivat, dessen logarithmisches Dekrement nach DIN 53445 bei Celsiustemperaturen von unter 0° ein Maximum aufweist, überraschenderweise nicht nur im Temperaturbereich von unter 0° C, sondern insbesondere im Bereich von -50° C bis +200° C als effektiver Verbundvermittler im Rahmen des erfindungsgemäßen Verbundmörtels zwischen Glasscheibe und Verbundmittelbeschichtung einerseits sowie zwischen Betonkörper und Verbundmittelbeschichtung andererseits, wirkt. Überraschenderweise beeinträchtigen auch relativ hohe Temperaturen, wie sie z. B. bei starker Sonneneinstrahlung oder in Brandfällen auftreten, die feste Haftung der Glasscheiben an dem Betonkörper nicht. Insofern ist die effektive Haftung gegenüber klimatischen Veränderungen und Wärmedehnungen der Glasscheibe unempfindlich. Der Fachmann konnte aber nicht erwarten, daß einerseits eine so feste und wärmeempfindliche Verbindung zwischen der Beschichtung und der Glasscheibe erreicht wird, daß aber andererseits auch Wärmedehnungen der Glasscheibe ohne Rißbildungen möglich sind.

Der feste Verbund zwischen der Beschichtung und der Glasscheibe wird offenbar durch eine molekulare Wechselwirkung des Polyacrylsäurederivats mit dem Glas erreicht. Es wird davon ausgegangen, daß durch den Zement in dem Verbundmörtel, insbesondere durch alkalische Bestandteile des Zementes, die Glasoberfläche gleichsam mikroskopisch aufgerauht wird, so daß eine größere Oberfläche für eine Wechselwirkung mit den molekularen Komponenten des Polyacrylsäurederivats entsteht. Bei dieser Aufrauhung können sich in der Glasoberfläche freie Silanolgruppen bilden, die zu chemischen und/oder physikalischen Wechselwirkungen mit den funktionellen Gruppen der Acrylsäuremonomereinheiten fähig sind. Vermutlich bilden sich hier relativ feste Wasserstoffbrückenbindungen zwischen diesen funktionellen Gruppen und den Silanolgruppen der Glasoberfläche aus. Daß derartig effektive physikochemische Wechselwirkungen zwischen einem organischen Polyacrylpolymer und dem anorganischen Glasmaterial möglich sind und daß hierdurch eine derart feste Haftung der Glasscheibe erzielbar ist, konnte der Fachmann aber nicht erwarten. Trotz dieser festen Haftung zwischen Glasscheibe und Beschichtung greift der Verbundmörtel die Glasscheibe überraschenderweise nicht sichtbar an. Besondere Bedeutung kommt im Rahmen der Erfindung einer Ausführungsform zu, bei der der Verbundmörtel Portlandzement als Zement enthält und mit einer wässrigen Dispersion eines Polyacrylates angemacht ist, welches Polyacrylat ein Copolymer mit Acrylnitril als Comonomer ist. Es wird davon ausgegangen, daß die alkalischen Komponenten des Portlandzementes die Oberfläche der Glasscheibe anätzen und somit besonders wirksam mikroskopisch aufrauhen, so daß eine sehr ausgeprägte Wechselwirkung zwischen der Glasoberfläche bzw. darin gebildeten Silanolgruppen und den Carboxyl- und/oder Nitrilgruppen des Polyacrylatcopolymers stattfinden kann. Besonders gute Ergebnisse erreicht man mit Glasscheiben aus Float-Glas.

Erfindungsgemäß steht die Glasscheibe vor Erhärtung des Betons beschichtungsseitig mit dem Beton in Verbindung, wobei sich der Beton mit der Beschichtung der Glasscheibe monolithisch verbindet. Das Merkmal "monolithisch verbindet" besagt, daß der Verbund nicht mit Hilfe eines zusätzlichen Klebers bewirkt wird, der auf die Oberfläche des mit der Glasscheibe zu versehenden Betonkörpers oder auf der Glasscheibe bzw. auf der Beschichtung der Glasscheibe aus Verbundmörtel aufgebracht wird. Der monolithische Verbund entsteht, wenn die Glasscheibe mit dem noch nicht erhärteten Beton in Verbindung steht. Monolithisch ist der Verbund, weil die Kristallite des Betons bei der Hydratation in den Verbundmörtel, der die Beschichtung bildet, gleichsam hineinwachsen und sich mit den Kristalliten in der Beschichtung verbinden, zumal dort noch eine Hydratation erfolgen kann, die darauf beruht, daß der Verbundmörtel auf der Glasscheibe mit Mangel an Hydratationswasser erhärtet ist und somit noch hydratationsfähig ist. Es versteht sich, daß das Hydratationswasser für den Verbundmörtel aus der wässrigen Dispersion des Polyacrylsäurederivates stammt. Es liegt aber auch im Rahmen der Erfindung, daß ggf. noch zusätzliches Hydratationswasser beim Anmachen des Verbundmörtels hinzugefügt werden kann, immer mit der Maßgabe, daß der Verbundmörtel auf der Glasscheibe mit Mangel an Hydrationswasser erhärtet und somit noch hydratationsfähig ist. Insofern kann auch Hydrationswasser aus dem noch nicht erhärteten Beton in die Verbundmörtelbeschichtung hineindiffundieren und kann somit eine Nachhärtung der Verbundmittelbeschichtung stattfinden. Der polymere Kunststoff in dem Verbundmörtel trägt zu dem monolithischen Verbund nicht bei, wenn er vermutlich auch das Hineinwachsen der Kristallite des Betons in die Beschichtung hinein unterstützt.

Das Polyacrylsäurederivat gemäß Merkmal 1.2) erlaubt es, den Verbundmörtel durch seinen Anteil an dem Polyacrylsäurederivat und die Dicke der Beschichtung so einzustellen, daß er im erhärteten Zustand Wärmedehnungen der Glasscheibe rißfrei mitmacht. Das Polyacrylsäurederivat verleiht dem Verbundmörtel der Beschichtung die Elastizität, die erforderlich ist, damit die Beschichtung die Wärmedehnungen rißfrei mitmachen kann. Nach bevorzugter Ausführungsform der Erfindung enthält die wässrige Dispersion des Polyacrylsäurederivats 50 - 65 Gew.-%, vorzugsweise 55 - 60 Gew.-% des Polyacrylsäurederivats und 35 - 50 Gew.-%, vorzugweise 40 bis 45 Gew.-% Wasser. Wird ein Polyacrylat im Rahmen der Erfindung eingesetzt, so zeichnet sich das erfindungsgemäß hergestellte Bauwerk durch ein besonders gutes Langzeitverhalten aus. Gemäß bevorzugter Ausführungsform der Erfindung hat sich ein Verbundmörtel bewährt, der mit folgendem Mischungsverhältnis angemacht ist:

| | |
|---|---|
| feinteilige neutrale Zuschlagsstoffe: | 10 bis 40 Gew.-% |
| Zement: | 10 bis 40 Gew.-% |
| wässrige Dispersion des Polyacrylsäurederivats: | 10 bis 40 Gew.-%. |

Es versteht sich, daß sich die Gewichtsprozentanteile im Rahmen einer erfindungsgemäßen Mischung jeweils zu 100 Gew.-% addieren.

Vorzugsweise ist der Verbundmörtel mit einem Mischungsverhältnis von 25 bis 35 Gew.-% an feinteiligem neutralen Zuschlagsstoff, 25 bis 35 Gew.-% an Zement und 25 bis 35 Gew.-% der wässrigen Dispersion des Polyacrylsäurederivats angemacht. Wie bereits erwähnt, ist die Menge an Hydrationswasser in dem Verbundmörtel stets so eingestellt, daß der Verbundmörtel auf der Glasscheibe mit Mangel an Hydrationswasser erhärtet. Es versteht sich, daß die Beschichtung der Glasscheiben eine solche Dicke aufweist, daß zum Betonkörper hin ein ausreichender Spannungsabbau erfolgt, wenn die Glasscheiben eine beachtliche Wärmedehnung erfahren, die Wärmedehnung des Betonkörpers an sich demgegenüber aber gering ist. Bezüglich der einzustellenden Dicke der Beschichtung hat sich eine Ausführungsform der Erfindung bewährt, bei der die Verbundmörtelschicht eine Schichtdicke von 2 bis 7 mm, vorzugsweise 4 bis 6 mm aufweist.

Die Erfindung geht somit von der Erkenntnis aus, daß bei einer Glasscheibe eine Beschichtung aus einem Verbundmörtel des beschriebenen Aufbaus einerseits mit der Oberfläche der Glasscheibe wirksam und dauerhaft verbunden werden kann während andererseits die Beschichtung durch elastische Verformung und folglich rißfrei den Wärmedehnungen der Glasscheiben folgen kann. Die Erfindung geht fernerhin von der Erkenntnis aus, daß überraschenderweise eine Beschichtung aus einem solchen Verbundmörtel mit dem Beton sich gleichsam monolithisch verbindet und dadurch eine unerwartet feste Haftung zwischen der Beschichtung und dem Betonkörper erzielt wird. Die Glasscheibe kann auf diese Weise langfristig und ohne die Haltbarkeit beeinträchtigende mechanische Zwänge an dem Betonkörper haften bleiben.

Zur Losung des erfindungsgemäßen technischen Problems lehrt die Erfindung weiterhin ein Verfahren zur Errichtung eines Bauwerkes des eingangs beschriebenen Aufbaus, wobei der Betonkörper in Ortbeton ausgeführt wird, mit den Verfahrensmaßnahmen:
14.1) Es werden nach Maßgabe der Größe des Betonkörpers Schalungstafeln hergestellt, die aus zumindest einer Glasscheibe mit einer einseitigen Beschichtung aus einem Verbundmörtel bestehen,
14.2) der Verbundmörtel wird mit einem feinteiligen neutralen Zuschlagstoff, Zement und einer wässrigen Dispersion eines Polyacrylsäurederivats angemacht, wobei das Polyacrylsäurederivat ein logarithmisches Dekrement, bestimmt nach DIN 53445, aufweist, welches bei Celsiustemperaturen von unter 0° ein Maximum aufweist,
14.3) der Mörtel wird im angemachten Zustand auf die Glasscheibe aufgebracht und auf dieser mit Mangel an Hydratationswasser erhärtet,
14.4) die Schalungstafeln werden in ein nach Maßgabe des herzustellenden Betonkörpers dimensioniertes Schalungsgerüst, mit der Beschichtung zum herzustellenden Betonkörper hin, eingesetzt,
14.5) der Beton wird in das Schalungsgerüst eingebracht und der Beton verbindet sich monolithisch mit der Beschichtung der Glasscheibe,
14.6) nach Erhärtung des Betonkörpers wird das Schalungsgerüst entfernt, die Schalungstafeln verbleiben als verlorene Schalung an dem Betonkörper und bilden eine Glasfassade des Betonkörpers,
wobei der Verbundmörtel durch seinen Anteil an dem Polyacrylsäurederivat und die Dicke der Beschichtung so eingestellt werden, daß sie Wärmedehnungen der Glasscheibe rißfrei mitmachen. - Im Rahmen dieses Verfahrens verbindet sich der noch nicht ausgehärtete Beton des Betonkörpers mit der Beschichtung aus dem Verbundmörtel monolithisch. Das Bauwerk im Rahmen dieses erfindungsgemäßen Verfahrens ist beispielsweise eine Bauwerkswand, deren Betonkörper in Ortbeton ausgeführt wird. Sind mehrere Glasscheiben als Schalungstafeln nebeneinander vorgesehen, so versteht es sich, daß zwischen den einzelnen Schalungstafeln und damit zwischen den einzelnen Glasscheiben üblicherweise Fugen vorgesehen werden, die von dem Verbundmörtel oder durch besondere Fugenverfüllmassen ausgefüllt werden. Der Betonkörper kann einseitig oder mehrseitig in der beschriebenen Weise mit Glasscheiben versehen werden. Der Beton kann in das Schalungsgerüst als Gießbeton eingegossen werden oder auch als Spritzbeton eingebracht werden.

Bezüglich der Erstellung von Bauwerken im Rahmen dieses erfindungsgemäßen Verfahrens, bei dem der Betonkörper in Ortbeton ausgeführt wird, geht die Erfindung von der grundsätzlichen Erkenntnis aus, daß Glasscheiben bei der Errichtung der Bauwerke eine Doppelfunktion erfüllen können, nämlich die von Schalungstafeln und die von Glasfassaden, die aus diesen Glasscheiben zusammengesetzt sind, weil die Glasscheiben als verlorene Schalung verwendet werden. Auf diese Weise entfällt eine aufwendige nachträgliche Montage der Glasscheiben.

Zur Lösung des erfindungsgemäßen technischen Problems lehrt die Erfindung fernerhin ein Verfahren zur Errichtung eines Bauwerkes des eingangs beschriebenen Aufbaus, wobei der Betonkörper und die Glasscheibe zu einem vorgefertigten Bauwerk vereinigt werden, mit den Verfahrensmaßnahmen:
15.1) Es wird nach Maßgabe der Größe des Betonkörpers zumindest eine Glasscheibe mit einer einseitigen Beschichtung aus einem Verbundmörtel hergestellt,
15.2) der Verbundmörtel wird mit einem feinteiligen neutralen Zuschlagstoff, Zement und einer wässrigen Dispersion eines Polyacrylsäurederivats angemacht, wobei das Polyacrylsäurederivat ein logarithmisches Dekrement, bestimmt nach DIN 53445, aufweist, welches bei Celsiustemperaturen von unter 0° ein Maximum aufweist,
15.3) der Mörtel wird im angemachten Zustand auf die Glasscheibe aufgebracht und auf dieser mit Mangel an Hydratationswasser erhärtet,
15.4) der Beton wird in eine Schalungsform eingebracht und vor Erhärtung des Betons wird die Glasscheibe beschichtungsseitig mit dem Beton in Verbindung gebracht und angedrückt, wobei sich der Beton mit der Beschichtung der Glasscheibe monolithisch verbindet,
wobei der Verbundmörtel durch seinen Anteil an dem Polyacrylsäurederivat und die Dicke der Beschichtung so eingestellt werden, daß sie Wärmedehnungen der Glasscheibe rißfrei mitmachen. - Werden mehrere Glasscheiben im Rahmen dieses erfindungsgemäßen Verfahrens nebeneinander angeordnet, so werden die Fugen zwischen den Glasscheiben mit dem Verbundmörtel oder mit einem besonderen Verfugungswerkstoff ausgefüllt.

Zur Lösung des technischen Problems lehrt die Erfindung weiterhin ein Verfahren zur Errichtung eines Bauwerkes des eingangs beschriebenen Aufbaus, wobei der Betonkörper und die Glasscheibe zu einem vorgefertigten Bauwerk vereinigt werden, mit den Verfahrensmaßnahmen:
16.1) Es wird nach Maßgabe der Größe des Betonkörpers zumindest eine Glasscheibe mit einer einseitigen Beschichtung aus einem Verbundmörtel hergestellt,
16.2) der Verbundmörtel wird mit einem feinteiligen neutralen Zuschlagstoff, Zement und einer wässrigen Dispersion eines Polyacrylsäurederivats angemacht, wobei das Polyacrylsäurederivat ein logarithmisches Dekrement, bestimmt nach DIN 53445, aufweist, welches bei Celsiustemperaturen von unter 0° ein Maximum aufweist,
16.3) der Mörtel wird im angemachten Zustand auf die Glasscheibe aufgebracht und auf dieser mit Mangel an Hydratationswasser erhärtet,
16.4) eine Betonschicht wird auf die erhärtete Verbundmörtelschicht aufgebracht, wobei der Beton sich monolithisch mit der Beschichtung der Glasscheibe verbindet,
wobei der Verbundmörtel durch seinen Anteil an dem Polyacrylsäurederivat und die Dicke der Beschichtung so eingestellt werden, daß sie Wärmedehnungen der Glasscheibe rißfrei mitmachen. - Vorzugsweise wird im Rahmen dieses Verfahrens eine dünne Betonschicht aufgebracht, beispielsweise in einer Schichtdicke von 5 bis 20 mm. Es versteht sich, daß auch zum Aufbringen dieser Betonschicht ggf. eine Schalungsform eingerichtet werden kann. Die auf diese Weise hergestellten plattenförmigen Bauwerke zeichnen sich durch eine relativ geringes Gewicht aus und sind somit leicht transportabel. Sie können auf einfache Weise als Fassadenelemente, beispielsweise an Gebäudeaußenwänden angebracht werden, wobei die Betonschicht gleichsam als Haftvermittler funktioniert und mit Hilfe eines Mörtels oder eines geeigneten Klebers an dem auszukleidenden Gegenstand befestigt wird.

Es versteht sich, daß auch bei den erfindungsgemäßen Verfahren nach den Ansprüchen 15 und 16 der Beton als Spritzbeton einbringbar ist oder als Gießbeton eingegossen werden kann.

Zusammenfassend ist festzustellen, daß sich die erfindungsgemäßen Verfahren durch eine einfache und wenig aufwendige Verfahrensweise auszeichnen und insbesondere dadurch, daß einerseits eine besonders feste Haftung der Beschichtung an der Glasscheibe erreicht wird und andererseits ebenfalls eine effektive Haftung der Beschichtung an dem Betonkörper sichergestellt wird. Irgendwelche negativen Einflüsse des Verbundmörtels auf die Glasscheiben selbst wurden nicht festgestellt.

Die erfindungsgemäß hergestellten Bauwerke können für die verschiedensten Zwecke eingesetzt werden. Insbesondere können sie die Außenwand eines Hauses, auch eines Hochhauses, bilden. Sie können aber beispielsweise auch für die Begrenzungswand eines Schwimmbeckens eingesetzt werden. Die bekannten Verfahren der Farbgebung von Glas und/oder Zement machen es hierbei möglich, auf wenig aufwendige Weise gefärbte Glasfassaden herzustellen, die einen besonderen ästhetischen Effekt hervorrufen.

Im folgenden wird die Erfindung anhand einer lediglich ein Ausführungsbeispiel darstellenden Zeichnung ausführlicher erläutert. Es zeigen in schematischer Darstellung
- Fig. 1: einen Querschnitt durch ein erfindungsgemäßes vorgefertigtes Bauwerk, ausschnittsweise,
- Fig. 2: den vergrößerten Ausschnitt A aus dem Gegenstand nach Fig. 1 um 90° gedreht mit hocherwärmter Glasscheibe, ausschnittsweise.

Das in den Figuren dargestellte vorgefertigte Bauwerk 1 besteht aus einem Betonkörper 2 und besitzt eine vorgesetzte Glasscheibe 4, die als Glasfassade 3 dient. Fassade steht hier für Schauseite des Bauwerks. Im Ausführungsbeispiel ist auf beiden Oberflächen des Betonkörpers 2 eine Glasscheibe 4 angeordnet.

Die Glasscheibe 4 weist bauwerksseitig eine Beschichtung 5 aus Verbundmörtel auf. Die Beschichtung 5 ist gemäß dem Merkmal 1.2 des Patentanspruches 1 eingerichtet. Der Verbundmörtel ist auf der Glasscheibe 4 mit Mangel an Hydratationswasser erhärtet. Die Beschichtung 5 aus dem Verbundmörtel ist mit dem Beton des Betonkörpers 2 monolithisch verbunden. Der Anteil des Polyacrylsäurederivates und die Dicke der Beschichtung 5 ist so eingestellt, daß die Beschichtung 5 Wärmedehnungen der Glasscheibe 4 rißfrei mitmacht.

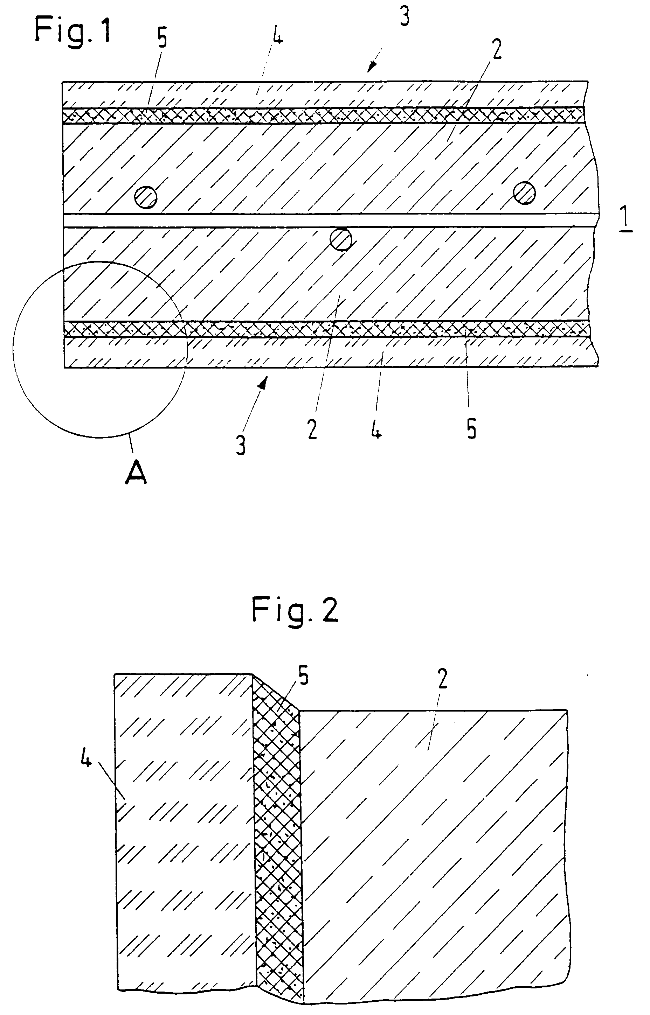

In der Fig. 2 mag die Glasscheibe 4 eine gegenüber der Temperatur, zu der die Darstellung nach Fig. 1 gehört, wesentliche Erwärmung erfahren haben, und zwar so, daß sie im ganzen und über ihre Dicke gleichmäßig eine Wärmedehnung erfahren hat. Wegen des intensiven Verbundes der Beschichtung 5 aus dem Verbundmörtel mit der Glasscheibe 4 einerseits und wegen der monolithischen Verbindung der Beschichtung 5 aus dem Verbundmörtel mit dem Betonkörper 2 andererseits, wegen des elastischen Verhaltens des Verbundmörtels insgesamt führte die Wärmedehnung und die Temperaturdifferenz zwischen der Glasscheibe 4 einerseits und dem Betonkörper 2 des Bauwerkes 1 andererseits zu den Veränderungen, die in der Fig. 2 aus Maßstabsgründen mit Übertreibung dargestellt worden sind. Die Beschichtung 5 hat einerseits die Wärmedehnung mitgemacht, ohne daß sich Risse bildeten, hat aber andererseits auch die Spannungen, die sich in der Beschichtung 5 bei einer Wärmedehnung der Glasscheibe 4 allein entwickeln, beachtlich reduziert. Im Ergebnis zeigt das Bauwerk 1, insbesondere in bezug auf die vorgesetzte Glasscheibe 4, eine überraschend lange Standzeit, wobei die Glasscheibe 4 allen Anforderungen genügt.

Im folgenden werden anhand eines konkreten Ausführungsbeispiels die Herstellung und die Eigenschaften eines erfindungsgemäßen Bauwerkes erläutert:

### Ausführungsbeispiel:

Zunächst wurde eine Verbundmörtel aus 33,3 Gew.-% Quarz, 33,3 Gew.-% Portlandzement und 33,3 Gew.-% einer wässrigen Dispersion eines Acrylates angemacht. Die wässrige Dispersion des Acrylates bestand aus 59 Gew.-% Acrylat und 41 Gew.-% Wasser. Das Acrylat war ein Copolymer mit Acrylnitril als Comonomer, wobei der Anteil des Acrylnitrilcomonomeren bezogen auf das Acrylat 4 Gew.-% betrug. Das eingesetzte Polyacrylsäurederivat wies ein logarithmisches Dekrement, bestimmt nach DIN 53445 auf, das bei -37° C ein Maximum aufweist. Der Quarz wies eine Körnung von 0,4 mm auf.

Es wurden vier Glasscheiben aus Einscheiben-Sicherheitsglas mit einer Dicke von 4 mm und einer Größe von 1200 mm x 1350 mm einseitig mit einer Beschichtung dieses Verbundmörtels versehen. Die Verbundmörtelschicht wies eine Schichtdicke von 5 mm auf. Die vier Glasscheiben wurden in Form eines Rechteckes neben- und übereinander angeordnet und auf diese Weise mit Saughaltern mit der beschichtungsfreien Glasoberfläche an einem Schalungsgerüst befestigt. Das so zusammengesetzte Rechteck aus Glasscheiben war im Ausführungsbeispiel als Schalungstafel für einen herzustellenden Betonkörper in Ortbeton in Form einer Betonwand, mit der Beschichtung zur herzustellenden Betonwand hin, vorgesehen. Die übrigen Seiten der Schalungsform für den Betonkörper wurden mit konventionellen Schalungstafeln versehen, mit der Maßgabe, daß die Betonwand eine Wandstärke von 200 mm erhalten sollte. Nach Errichtung dieser Schalungsform wurde der Beton von oben in die Form eingegossen und etwa 20 Stunden ruhengelassen. Danach wurde die Schalung aus den konventionellen Schalungstafeln sowie das Schalungsgerüst entfernt. Der noch nicht vollkommen ausgehärtete Beton konnte sich dann mit der Beschichtung auf den Glasscheiben monolithisch verbinden.

Nach einem halben Jahr wurde die Haftung der Glasscheiben auf dem Beton bzw. an der Beschichtung überprüft. Dazu wurden die Scheiben zerschlagen. Die dabei entstehenden Glasscherben hafteten außerordentlich gut an dem Beton, so daß sie nur mit Hammer und Meißel vom Beton abgelöst werden konnten. Bemerkenswert war hierbei, daß keine Ablösung der Beschichtung von den Glasscherben stattfand, sondern die Verbundmörtelschicht im wesentlichen an den Glasscherben haften blieb.

Im Rahmen eines weiteren Versuches wurde ein vorgefertigtes Bauelement mit einem Verbundmörtel des oben angegebenen Mischungsverhältnisses und mit den oben angegebenen Eigenschaften hergestellt. Dabei wurden acht Glasscheiben aus Einscheiben-Sicherheitsglas mit einer Dicke von 4 mm und einer Größe von jeweils 400 mm x 400 mm einseitig mit einer Beschichtung des Verbundmörtel versehen wobei die Verbundmörtelschicht eine Schichtdicke von 5 mm aufwies. Das vorgefertigte Bauelement wurde nach dem Verfahren gemäß Patentanspruch 15 hergestellt. Die acht Glasscheiben wurden in Rechteck-Form auf einen Betonkörper mit den entsprechenden Ausmaßen aufgebracht. Der Betonkörper wies eine Dicke von 60 mm auf. Das so hergestellte vorgefertigte Bauwerk wurde mit seinem Betonkörper in ein Wasserbad gehängt. Nach einem halben Jahr wurde die Haftzugfestigkeit der Glasscheiben überprüft. Dabei wurden die Glasscheiben mit einer Zugkraft von 1,4 N/mm² belastet. Die Glasscheiben zeigten hierbei keinerlei Ablöseerscheinungen. Nach einem Jahr seit Versuchsbeginn wurde das in dem Wasserbad verbliebene vorgefertigte Bauwerk unter den gleichen Bedingungen erneut untersucht. Wieder zeigten sich keinerlei Ablöseerscheinungen der Glasscheiben.

## Patentansprüche

1. Bauwerk (1) aus einem Betonkörper (2) mit zumindest einer vorgesetzten Glasscheibe (4), welches die folgenden Merkmale aufweist:
1.1) Die Glasscheibe (4) weist bauwerkseitig eine Beschichtung (5) aus Verbundmörtel auf,
1.2) der Verbundmörtel besteht aus einem feinteiligen neutralen Zuschlagstoff, Zement und ist mit einer wässrigen Dispersion eines Polyacrylsäurederivats angemacht, wobei das Polyacrylsäurederivat ein logarithmisches Dekrement, bestimmt nach DIN 53445, aufweist, welches bei Celsiustemperaturen von unter 0° ein Maximum aufweist,
1.3) der Verbundmörtel ist auf der Glasscheibe (4) mit Mangel an Hydratationswasser erhärtet,
1.4) die Beschichtung (5) der Glasscheibe (4) aus Verbundmörtel ist mit dem Beton (2) des Bauwerkes (1) monolithisch verbunden,
wobei der Verbundmörtel gemäß 1.2) durch seinen Anteil an dem Polyacrylsäurederivat und die Dicke der Beschichtung (5) so eingestellt sind, daß sie Wärmedehnungen der Glasscheibe (4) rißfrei mitmachen.

2. Bauwerk nach Anspruch 1, wobei die Glasscheiben eine Dicke von 4 mm und mehr aufweisen, vorzugsweise eine Dicke von etwa 4 bis 8 mm.

3. Bauwerk nach einem der Ansprüche 1 oder 2, wobei die Glasscheibe (4) vorgespannt ist.

4. Bauwerk nach einem der Ansprüche 1 bis 3, wobei die Glasscheibe als Float-Glasscheibe ausgeführt ist.

5. Bauwerk nach einem der Ansprüche 1 bis 4, wobei die Verbundmörtelschicht eine Schichtdicke von 2 bis 7 mm, vorzugsweise 4 bis 6 mm, aufweist.

6. Bauwerk nach einem der Ansprüche 1 bis 5, wobei der Verbundmörtel einen feinteiligen neutralen Zuschlagsstoff der Körnung von 0,1 bis 1 mm, vorzugsweise 0,2 bis 0,7 mm, aufweist.

7. Bauwerk nach einem der Ansprüche 1 bis 6, wobei der Zement Portlandzement ist.

8. Bauwerk nach einem der Ansprüche 1 bis 7, wobei das Polyacrylsäurederivat ein Polyacrylat, vorzugsweise ein Acrylharz, ist.

9. Bauwerk nach einem der Ansprüche 1 bis 8, wobei das Polyacrylsäurederivat ein Copolymer mit Acrylnitril als Comonomer ist.

10. Bauwerk nach Anspruch 9, wobei der Anteil des Acrylnitrilcomonomeren bezogen auf das Polyacrylsäurederivat zumindest 2 Gew.-% beträgt.

11. Bauwerk nach einem der Ansprüche 1 bis 10, wobei die wässrige Dispersion des Polyacrylsäurederivates 50 - 65 Gew.-%, vorzugsweise 55 - 60 Gew.-% des Polyacrylsäurederivates und 35 - 50 Gew.-%, vorzugsweise 40 bis 45 Gew.-% Wasser enthält.

12. Bauwerk nach einem der Ansprüche 1 bis 11, wobei der Verbundmörtel mit folgendem Mischungsverhältnis angemacht ist:
| | |
|---|---|
| feinteilige neutrale Zuschlagsstoffe: | 10 bis 40 Gew.-% |
| Zement: | 10 bis 40 Gew.-% |
| wässrige Dispersion des Polyacrylsäurederivates: | 10 bis 40 Gew.-%. |

13. Bauwerk nach einem der Ansprüche 1 bis 12, wobei der Verbundmörtel mit einem Mischungsverhältnis von vorzugsweise 25 bis 35 Gew.-% an feinteiligem neutralen Zuschlagsstoff, 25 bis 35 Gew.-% an Zement und 25 bis 35 Gew.-% der wässrigen Dispersion des Polyacrylsäurederivats angemacht ist.

14. Verfahren zur Errichtung eines Bauwerkes nach einem der Ansprüche 1 bis 13, wobei der Betonkörper in Ortbeton ausgeführt wird, mit den Verfahrensmaßnahmen:
14.1) Es werden nach Maßgabe der Größe des Betonkörpers Schalungstafeln hergestellt, die aus zumindest einer Glasscheibe mit einer einseitigen Beschichtung aus einem Verbundmörtel bestehen,
14.2) der Verbundmörtel wird mit einem feinteiligen neutralen Zuschlagstoff, Zement und einer wässrigen Dispersion eines Polyacrylsäurederivats angemacht, wobei das Polyacrylsäurederivat ein logarithmisches Dekrement, bestimmt nach DIN 53445, aufweist, welches bei Celsiustemperaturen von unter 0° ein Maximum aufweist,
14.3) der Mörtel wird im angemachten Zustand auf die Glasscheibe aufgebracht und auf dieser mit Mangel an Hydratationswasser erhärtet,
14.4) die Schalungstafeln werden in ein nach Maßgabe des herzustellenden Betonkörpers dimensioniertes Schalungsgerüst, mit der Beschichtung zum herzustellenden Betonkörper hin, eingesetzt,
14.5) der Beton wird in das Schalungsgerüst eingebracht und der Beton verbindet sich monolithisch mit der Beschichtung der Glasscheibe,
14.6) nach Erhärtung des Betonkörpers wird das Schalungsgerüst entfernt, die Schalungstafeln verbleiben als verlorene Schalung an dem Beton-körper und bilden eine Glasfassade des Betonkörpers,
wobei der Verbundmörtel durch seinen Anteil an dem Polyacrylsäurederivats und die Dicke der Beschichtung so eingestellt werden, daß sie Wärmedehnungen der Glasscheibe rißfrei mitmachen.

15. Verfahren zur Errichtung eines Bauwerkes nach einem der Ansprüche 1 bis 13, wobei der Betonkörper und die Glasscheibe zu einem vorgefertigten Bauwerk vereinigt werden, mit den Verfahrensmaßnahmen:
15.1) Es wird nach Maßgabe der Größe des Betonkörpers zumindest eine Glasscheibe mit einer einseitigen Beschichtung aus einem Verbundmörtel hergestellt,
15.2) der Verbundmörtel wird mit einem feinteiligen neutralen Zuschlagstoff, Zement und einer wässrigen Dispersion eines Polyacrylsäurederivats angemacht, wobei das Polyacrylsäurederivat ein logarithmisches Dekrement, bestimmt nach DIN 53445, aufweist, welches bei Celsiustemperaturen von unter 0° ein Maximum aufweist,
15.3) der Mörtel wird im angemachten Zustand auf die Glasscheibe aufgebracht und auf dieser mit Mangel an Hydratationswasser erhärtet,
15.4) der Beton wird in eine Schalungsform eingebracht und vor Erhärtung des Betons wird die Glasscheibe beschichtungsseitig mit dem Beton in Verbindung gebracht und angedrückt, wobei sich der Beton mit der Beschichtung der Glasscheibe monolithisch verbindet,
wobei der Verbundmörtel durch seinen Anteil an dem Polyacrylsäurederivat und die Dicke der Beschichtung so eingestellt werden, daß sie Wärmedehnungen der Glasscheibe rißfrei mitmachen.

16. Verfahren zur Errichtung eines Bauwerkes nach einem der Ansprüche 1 bis 13, wobei der Betonkörper und die Glasscheibe zu einem vorgefertigten Bauwerk vereinigt werden, mit den Verfahrensmaßnahmen:
16.1) Es wird nach Maßgabe der Größe des Betonkörpers zumindest eine Glasscheibe mit einer einseitigen Beschichtung aus einem Verbundmörtel hergestellt,
16.2) der Verbundmörtel wird mit einem feinteiligen neutralen Zuschlagstoff, Zement und einer wässrigen Dispersion eines Polyacrylsäurederivats angemacht, wobei das Polyacrylsäurederivat ein logarithmisches Dekrement, bestimmt nach DIN 53445, aufweist, welches bei Celsiustemperaturen von unter 0° ein Maximum aufweist,
16.3) der Mörtel wird im angemachten Zustand auf die Glasscheibe aufgebracht und auf dieser mit Mangel an Hydratationswasser erhärtet,
16.4) eine Betonschicht wird auf die erhärtete Verbundmörtelschicht aufgebracht, wobei der Beton sich monolithisch mit der Beschichtung der Glasscheibe verbindet,
wobei der Verbundmörtel durch seinen Anteil an dem Polyacrylsäurederivat und die Dicke der Beschichtung so eingestellt werden, daß sie Wärmedehnungen der Glasscheibe rißfrei mitmachen.

## Claims

1. A building (1) comprising a concrete body (2) having at least one pre-installed window glass (4), which has the following features:
1.1) the window glass (4) has a coating (5) of composite mortar on its side facing the building,
1.2) the composite mortar consists of a finely divided neutral aggregate and cement, ad is mixed with an aqueous dispersion of a polyacrylic acid derivative, wherein the polyacrylic acid derivative has a logarithmic decrement, as determined according to DIN 53445, which exhibits a maximum at Celsius temperatures below 0°,
1.3) the composite mortar is set on the window glass (4) with a deficiency of water of hydration,
1.4) the coating (5) of composite mortar on the window glass (4) is bonded monolithically to the concrete (2) of the building (1),
wherein the content of polyacrylic acid derivative of the composite mortar as defined in 1.2) is adjusted, and the thickness of the coating (5) is adjusted, so that they permit thermal expansions of the window glass (4) to occur without cracking.

2. A building according to claim 1, wherein the window glasses have a thickness of 4 mm or more, and preferably have a thickness of about 4 to 8 mm.

3. A building according to either one of claims 1 or 2, wherein the window glass (4) is prestressed.

4. A building according to any one of claims 1 to 3, wherein the window glass is produced as a float glass pane.

5. A building according to any one of claims 1 to 4, wherein the composite mortar layer has a layer thickness of 2 to 7 mm, preferably 4 to 6 mm.

6. A building according to any one of claims 1 to 5, wherein the composite mortar a comprises a finely divided neutral aggregate with a particle size distribution of 0.1 to 1 mm, preferably 0.2 to 0.7 mm,

7. A building according to any one of claims 1 to 6, wherein the cement is portland cement.

8. A building according to any one of claims 1 to 7, wherein the polyacrylic acid derivative is a polyacrylate, preferably an acrylic resin.

9. A building according to any one of claims 1 to 8, wherein the polyacrylic acid derivative is a copolymer comprising acrylonitrile as a comonomer.

10. A building according to claim 9, wherein the content of acrylonitrile comonomer is at least 2 % by weight with respect to the polyacrylic acid derivative.

11. A building according to any one of claims 1 to 10. wherein the aqueous dispersion of the .polyacrylic acid derivative contains 50 - 65 % by weight, preferably 55 - 60 % by weight, of the polyacrylic acid derivative, and 35 - 50 % by weight, preferably 40 to 45 % by weight, of water.

12. A building according to any one of claims 1 to 11, wherein the composite mortar is mixed at the following mixture ratio:
| | |
|---|---|
| finely divided neutral aggregate: | 10 to 40 % by weight |
| cement: | 10 to 40 % by weight |
| aqueous dispersion of polyacrylic acid derivative: | 10 to 40 % by weight. |

13. A building according to any one of claims 1 to 12, wherein the composite mortar is mixed at a mixture ratio which is preferably 25 to 35 % by weight of finely divided neutral aggregate, 25 to 35 % by weight of cement and 25 to 35 % by weight of the aqueous dispersion of the polyacrylic acid derivative.

14. A process for constructing a building according to any one of claims 1 to 13, wherein the concrete body is produced from site-mixed concrete, comprising the process measures:
14.1) shuttering panels, which consist of at least one window glass having a coating of a composite mortar on one side, are fabricated in accordance with the size of the concrete body,
14.2) the composite mortar is mixed from a finely divided neutral aggregate, cement, and an aqueous dispersion of a polyacrylic acid derivative, wherein the polyacrylic acid derivative has a logarithmic decrement, as determined according to DIN 53445, which exhibits a maximum at Celsius temperatures below 0°,
14.3) the mortar is applied in its mixed state to the window glass and sets thereon with a deficiency of water of hydration,
14.4) the shuttering panels are inserted in a shuttering framework, which is sized in accordance with the concrete body to be fabricated, with the coating towards the concrete body to be fabricated,
14.5) the concrete is introduced into the shuttering framework and the concrete bonds itself monolithically to the coating on the window glass,
14.6) after the concrete body has set, the shuttering framework is removed, and the shuttering panels remain on the concrete body as lost shuttering units and form a glass facade of the concrete body,
wherein the content of polyacrylic acid derivative of the composite mortar is adjusted, and the thickness of the coating is adjusted, so that they permit thermal expansions of the window glass to occur without cracking.

15. A process for constructing a building according to any one of claims 1 to 13, wherein the concrete body and the window glass are combined to form a prefabricated building, comprising the process measures:
15.1) at least one window glass, which has a coating of a composite mortar on one side, is fabricated in accordance with the size of the concrete body,
15.2) the composite mortar is mixed from a finely divided neutral aggregate, cement, and an aqueous dispersion of a polyacrylic acid derivative, wherein the polyacrylic acid derivative has a logarithmic decrement, as determined according to DIN 53445, which exhibits a maximum at Celsius temperatures below 0°,
15.3) the mortar is applied in its mixed state to the window glass and sets thereon with a deficiency of water of hydration,
15.4) the concrete is introduced into a shuttering mould, and before the concrete sets the coating side of the window glass is brought into contact with the concrete and is pressed thereon, whereupon the concrete bonds itself monolithically to the coating on the window glass,
wherein the content of polyacrylic acid derivative of the composite mortar is adjusted, and the thickness of the coating is adjusted, so that they permit thermal expansions of the window glass to occur without cracking.

16. A process for constructing a building according to any one of claims 1 to 13, wherein the concrete body and the window glass are combined to form a prefabricated building, comprising the process measures:
16.1) at least one window glass, which has a coating of a composite mortar on one side, is fabricated in accordance with the size of the concrete body,
16.2) the composite mortar is mixed from a finely divided neutral aggregate, cement, and an aqueous dispersion of a polyacrylic acid derivative, wherein the polyacrylic acid derivative has a logarithmic decrement, as determined according to DIN 53445, which exhibits a maximum at Celsius temperatures below 0°,
16.3) the mortar is applied in its mixed state to the window glass and sets thereon with a deficiency of water of hydration,
16.4) a layer of concrete is applied to the set layer of composite mortar, whereupon the concrete bonds itself monolithically to the coating on the window glass,
wherein the content of polyacrylic acid derivative of the composite mortar is adjusted, and the thickness of the coating is adjusted, so that they permit thermal expansions of the window glass to occur without cracking.

## Revendications

1. Construction (1) constituée d'un corps en béton (2) avec au moins une plaque de verre (4), placée devant, construction gui présente les caractéristiques suivantes :
1) La plaque de verre (4) présente, du côté de la construction, un enduit (5) en mortier composite,
2) le mortier composite est constitué d'un additif neutre finement divisé, de ciment et est gâché avec une dispersion aqueuse d'un dérivé d'acide polyacrylique qui présente un décrément logarithmique, déterminé selon la norme DIN 53445, ayant un maximum à des températures inférieures à 0 °C,
3) le mortier composite est durci sur la place de verre (4) par défaut d'eau d'hydratation,
4) l'enduit (5) en mortier composite de la plaque de verre (4) est lié de manière monolithique au béton (2) de la construction (1),
et on règle le mortier composite selon 2) par sa teneur en dérivé de l'acide polyacrylique et l'épaisseur de l'enduit (5) de telle manière qu'ils suivent sans fissure les dilatations à chaud de la plaque de verre (4).

2. Construction selon la revendication 1, dans laquelle les plaques de verre présentent une épaisseur d'au moins 4 mm, de préférence d'environ 4 à 8 mm.

3. Construction selon la revendication 1 ou 2, dans laquelle la plaque de verre (4) est précontrainte.

4. Construction selon l'une quelconque des revendications 1 à 3, pour laquelle la plaque de verre est réalisée sous la forme d'une plaque de verre par flottaison.

5. Construction selon l'une quelconque des revendications 1 à 4, dans laquelle la couche de mortier composite présente une épaisseur de couche de 2 à 7 mm, de préférence de 4 à 6 mm.

6. Construction selon l'une quelconque des revendications 1 à 5, dans laquelle le mortier composite contient un additif neutre finement divisé ayant une taille de grain de 0,1 à 1 mm, de préférence de 0,2 à 0,7 mm.

7. Construction selon l'une quelconque des revendications 1 à 6, dans laquelle le ciment est du ciment de Portland.

8. Construction selon l'une quelconque des revendications 1 à 7, dans laquelle le dérivé d'acide polyacrylique est un polyacrylate, de préférence une résine acrylique.

9. Construction selon l'une quelconque des revendications 1 à 8, dans laquelle le dérivé de l'acide polyacrylique est un copolymère avec de l'acrylonitrile comme comonomère.

10. Construction selon la revendication 9, pour laquelle la proportion du comonomère acrylonitrile, rapportée au dérivé de l'acide polyacrylique, atteint au moins 2 % en poids.

11. Construction selon l'une quelconque des revendications 1 à 10, pour laquelle la dispersion aqueuse du dérivé de l'acide polyacrylique contient 50 à 65 % en poids, de préférence 55 à 60 % en poids, du dérivé de l'acide polyacrylique, et 35 à 50 % en poids, de préférence 40 à 45 % en poids d'eau.

12. Construction selon l'une quelconque des revendications 1 à 11, pour laquelle le mortier composite est gâché suivant les proportions suivantes :
| | |
|---|---|
| - additif neutre finement divisé : | 10 à 40 % en poids |
| - ciment : | 10 à 40 % en poids |
| - dispersion aqueuse du dérivé de l'acide polyacrylique : | 10 à 40 % en poids |

13. Construction selon l'une quelconque des revendications 1 à 12, pour laquelle le mortier composite est gâché selon les proportions préférées suivantes : 25 à 35 % en poids d'additif neutre finement divisé, 25 à 35 % en poids de ciment et 25 à 35 % en poids de dispersion aqueuse de dérivé de l'acide polyacrylique.

14. Procédé pour ériger une construction selon l'une quelconque des revendications 1 à 13, le corps en béton étant réalisé en béton coulé sur place, procédé qui comprend les dispositions suivantes :
1) on prépare en fonction de la taille du corps en béton des panneaux de coffrage qui sont constitués d'au moins une plaque de verre portant d'un côté un enduit en mortier composite,
2) on obtient le mortier composite en gâchant un additif neutre finement divisé, du ciment et une dispersion aqueuse d'un dérivé d'acide polyacrylique qui présente un décrément logarithmique, déterminé selon la norme DIN 53445, ayant un maximum à des températures inférieures à 0 °C,
3) le mortier est appliqué à l'état gâché sur la plaque de verre et est durci sur cette dernière par manque d'eau d'hydratation,
4) les panneaux de coffrage sont disposés dans un cadre de coffrage dont les dimensions dépendent du corps en béton à préparer, l'enduit étant tourné vers le corps en béton à préparer,
5) le béton est introduit dans le cadre de coffrage et se lie de manière monolithique à l'enduit de la plaque de verre,
6) après la prise du corps en béton, on enlève le cadre de coffrage et les panneaux de coffrage restent comme coffrage perdu sur le corps en béton et forment une façade de verre sur le corps en béton,
et on règle le mortier composite par sa teneur en dérivé de l'acide polyacrylique et l'épaisseur de l'enduit de telle manière qu'ils suivent sans fissure les dilatations à chaud de la plaque de verre.

15. Procédé pour ériger une construction selon l'une quelconque des revendications 1 à 13, le corps en béton et la plaque de verre étant réunis en une structure fabriquée au préalable, procédé qui comprend les dispositions suivantes :
1) on prépare en fonction de la taille du corps en béton au moins une plaque de verre présentant d'un côté un enduit en un mortier composite,
2) on obtient le mortier composite en gâchant un additif neutre finement divisé, du ciment et une dispersion aqueuse d'un dérivé d'acide polyacrylique qui présente un décrément logarithmique, déterminé selon la norme DIN 53445, ayant un maximum à des températures inférieures à 0 °C,
3) le mortier est appliqué à l'état gâché sur la plaque de verre et est durci sur cette dernière par manque d'eau d'hydratation,
4) le béton est introduit dans une forme de coffrage et, avant la prise du béton, la plaque de verre est amenée par son côté enduit en contact avec le béton et est pressée, grâce à quoi le béton se lie de manière monolithique à l'enduit de la plaque de verre, et on règle le mortier composite par sa teneur en dérivé d'acide polyacrylique et l'épaisseur de l'enduit de telle manière qu'ils suivent sans fissure les dilatations à chaud de la plaque de verre.

16. Procédé pour ériger une construction selon l'une quelconque des revendications 1 à 13, le corps en béton et la plaque de verre étant réunis en une structure fabriquée au préalable, procédé qui comprend les dispositions suivantes :
1) on prépare en fonction de la taille du corps en béton au moins une plaque de verre portant d'un côté un enduit en un mortier composite,
2) on obtient le mortier composite en gâchant un additif neutre finement divisé, du ciment et une dispersion aqueuse d'un dérivé d'acide polyacrylique qui présente un décrément logarithmique, déterminé selon la norme DIN 53445, ayant un maximum à des températures inférieures à 0 °C,
3) le mortier est appliqué à l'état gâché sur la plaque de verre et est durci sur cette dernière par manque d'eau d'hydratation,
4) une couche de béton est appliquée sur la couche durcie de mortier composite, grâce à quoi le béton se lie de manière monolithique à l'enduit de la plaque de verre,
et l'on règle le mortier composite par sa teneur en dérivé d'acide polyacrylique et l'épaisseur de l'enduit de telle manière qu'ils suivent sans fissure les dilatations à chaud de la plaque de verre.
